# FASCICULE DE BREVET EUROPEEN

(11) **EP 0 432 615 B1**
(45) Date de publication et mention de la délivrance du brevet: **23.02.1994**
(21) Numéro de dépôt: 90123185.2
(22) Date de dépôt: 04.12.1990
(51) Int. Cl.: A47J 27/14

(54) **Appareil de pétrissage et de cuisson**
Vorrichtung für Mischen und Kochen
Mixing and cooking device

(30) Priorité: 13.12.1989 FR 8916450
(43) Date de publication de la demande: 19.06.1991
(73) Titulaire: MOULINEX, F-93170 Bagnolet (FR)
(72) Inventeur: Letournel, Gilles Jean-Marie, F-14123 Cormelles-Le-Royal (FR); Parise, Vital André, F-14123 Cormelles-Le-Royal (FR)
(74) Mandataire: May, Hans Ulrich, Dr.

(56) Documents cités:
- EP-A- 0 131 264
- EP-A- 0 219 077
- GB-A- 2 196 238
- NL-C- 49 720

## Description

L'invention concerne un appareil de pétrissage et de cuisson d'ingrédients alimentaires, comprenant un bol de travail comportant un fond et une paroi latérale, et monté amovible sur un socle renfermant un mécanisme d'entraînement dont l'arbre de sortie est destiné à venir s'accoupler avec un arbre d'entraînement qui traverse le fond du bol et qui est solidaire en rotation d'un outil de travail agencé dans le bol, ledit bol étant formé d'une cuve et d'une enveloppe montées à légère distance l'une de l'autre, et comportant en outre des moyens de chauffage qui sont agencés dans l'espace laissé entre la cuve et l'enveloppe et qui sont alimentés en courant électrique par l'intermédiaire d'organes de connexion électrique complémentaires.

Un appareil de ce type, tel que défini dans le préambule de la revendication 1, est connu du document EP-A-0 131 264.

D'après ce document, l'appareil est adapté principalement à la préparation du pain, l'outil de travail assurant le pétrissage des ingrédients et les moyens de chauffage de voûte et de sole transmettant de la chaleur au bol de manière à permettre la cuisson des ingrédients.

On connaît également, d'après le document GB-A-2 196 238, un appareil de pétrissage et de cuisson qui est adapté principalement à la préparation des sauces et crèmes, l'outil de travail assurant le pétrissage des ingrédients et les moyens de chauffage étant disposés dans la paroi latérale du bol et transmettant de la chaleur au bol de manière à permettre la cuisson des ingrédients.

Ces appareils présentent donc l'inconvénient d'être très limités quant à leur utilisation.

L'invention a pour but de remédier à cet inconvénient et de fournir un appareil ayant de nombreuses possibilités d'utilisations tout en étant simple, économique et d'un emploi aisé.

Selon l'invention, un appareil de pétrissage et de cuisson du type décrit précédemment, est plus particulièrement caractérisé en ce que les moyens de chauffage sont répartis en un élément chauffant latéral destiné à chauffer la paroi latérale de la cuve et constitué par un fil résistant bobiné autour d'un support isolant entourant la cuve, et en un élément chauffant de fond destiné à chauffer le fond de la cuve et constitué par une résistance chauffante blindée, et le rapport de la puissance de l'élément chauffant latéral à la puissance maximale de l'élément chauffant de fond est compris entre 0,3 et 0,4, lesdits organes de connexion électrique complémentaires étant amovibles et agencés respectivement sur l'enveloppe et le socle.

Ainsi on obtient un appareil qui est adapté à la préparation, non seulement des sauces et des crèmes, mais aussi des pâtisseries, pain, gâteaux etc... En effet, cet appareil peut se transformer en saucier, poêle ou four suivant le mode de chauffage. Ainsi, pour préparer du pain ou des gâteaux, les ingrédients sont d'abord pétris par l'outil de travail, puis la cuisson est effectuée par chauffage simultané des deux éléments chauffants. Pour préparer des sauces, crèmes ou même pour rissoler, l'outil brasse les ingrédients, alors que la cuisson n'est effectuée que par l'élément chauffant de fond.

Les caractéristiques et avantages de l'invention ressortiront d'ailleurs de la description qui va suivre, à titre d'exemple, en référence au dessin annexé dans lequel :

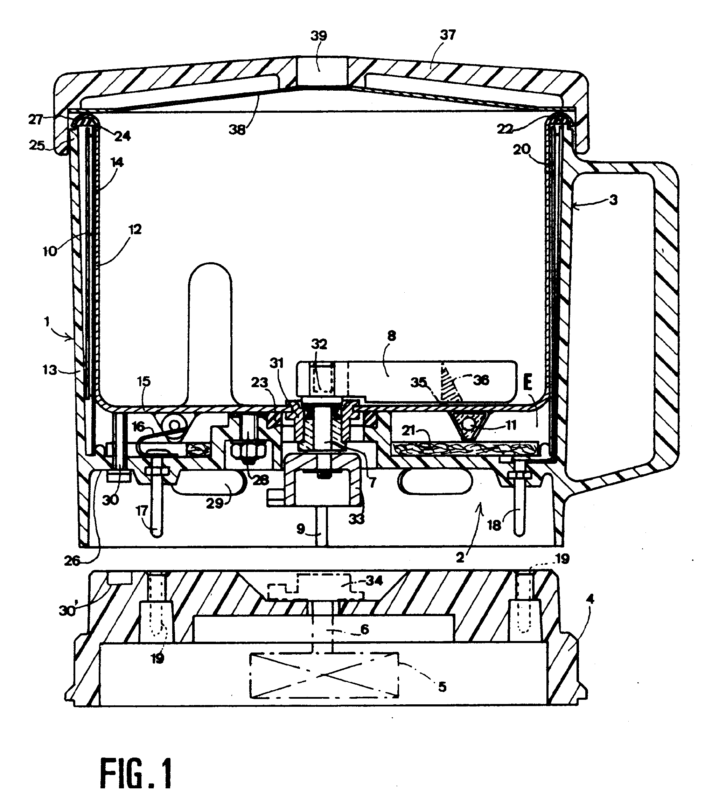

la figure 1 représente une vue en coupe transversale d'un appareil selon l'invention.

L'appareil de pétrissage et de cuisson d'ingrédients alimentaires représenté sur la figure 1 comprend un bol de travail 1 comportant un fond 2 et une paroi latérale 3, et monté amovible sur un socle 4 renfermant un mécanisme d'entraînement 5 (représenté en traits interrompus) dont l'arbre de sortie 6 est destiné à venir s'accoupler avec un arbre d'entraînement 7 qui traverse le fond 2 du bol 1 et qui est solidaire en rotation d'un outil de travail 8 agencé dans ledit bol 1.

Grâce à son amovibilité, ce bol 1 peut être utilisé sur le socle 4 d'un robot ménager en tant qu'accessoire au même titre qu'un hachoir, mixeur, trancheur...

Le bol 1 est indexé en rotation par trois nervures 9 qui supportent les efforts en torsion. Le bol 1 comporte en outre des moyens de chauffage 10,11 adaptés à chauffer le bol 1 de manière à permettre la cuisson des ingrédients.

Selon l'invention, le bol 1 est formé d'une double cloison comprenant une cuve 12 en métal et une enveloppe 13 constituées d'un matériau plastique moulé isolant thermique et montées à légère distance l'une de l'autre. Les moyens de chauffage 10,11 sont agencés dans l'espace E laissé entre la cuve 12 et l'enveloppe 13 et sont répartis en un élément chauffant latéral 10 et un élément chauffant de fond 11 de manière à chauffer respectivement la paroi latérale 14 et le fond 15 de ladite cuve 12, les moyens de chauffage 10,11 étant alimentés en courant électrique par l'intermédiaire de deux paires d'organes de connexion électrique complémentaires et amovibles, soit des broches 17, 18 et des douilles 19, agencés respectivement sur l'enveloppe 13 et le socle 4.

Le raccordement de l'élément chauffant de fond 11 avec la paire de broches 17 se fait par appui de lames souples 16 serties sur les broches 17. L'élément chauffant latéral 10 est raccordé directement sur la paire de broches 18.

L'élément chauffant latéral 10 entoure ladite cuve 12 et s'étend pratiquement sur toute la hauteur de ladite paroi latérale 14. Il est constitué par un fil résistant bobiné autour d'un support isolant 20, par exemple en samicanite, entourant la cuve 12. La puissance de l'élément chauffant latéral 10 est fixe et comprise entre 120 et 160 W.

L'élément chauffant de fond 11 est constitué par une résistance chauffante blindée, solidaire du fond 15 de la cuve et séparé de l'enveloppe 13 par un matériau isolant 21 du type laine de verre. La puissance de l'élément chauffant de fond 11 est variable de 0 à 400 W. Le rapport de la puissance de l'élément chauffant latéral 10 à la puissance maximale de l'élément chauffant de fond 11 est donc compris entre 0,3 et 0,4.

L'espace E entre la cuve 12 et l'enveloppe 13 est rendu étanche par des moyens d'étanchéité 22,23 du type joints de silicone interposés, d'une part, entre les bords supérieurs 24,25 de la cuve 12 et de l'enveloppe 13 et, d'autre part, entre les parois respectives des fonds 15,26 de la cuve 12 et de l'enveloppe 13.

La cuve 12 et l'enveloppe 13 sont cylindriques et le bord supérieur 24 de ladite cuve 12 présente un rebord 27 en forme de gorge qui vient recouvrir le bord 25 de l'enveloppe 13 et qui contient le joint 22.

Le fond 15 de la cuve 12 comporte des moyens de fixation 28 avec l'enveloppe 13, constitués par quatre pions filetés et soudés à la cuve 12, de manière à constituer, avec les moyens d'étanchéité 22,23, un bol 1 parfaitement étanche. Ainsi rendu étanche, le bol 1 peut être lavé à grande eau. Des ouvertures 29 pratiquées sous le fond 2 du bol permettent, soit à l'eau de s'écouler après lavage, soit pendant la cuisson de ventiler le fond 2 du bol 1. Le bol ne laisse apparaître sur le fond 26 de l'enveloppe que lesdits organes de connexion électrique 17,18, un plot de capteur de température 30 et l'extrémité de l'arbre d'entraînement 7. L'arbre d'entraînement 7 est monté de façon étanche dans un palier 31 solidaire du fond 15 de la cuve, dont une extrémité est reliée à un moyeu 32 de l'outil de travail 8 et dont l'autre extrémité est équipée d'un organe d'accouplement amovible 33 destiné à venir en prise avec un entraîneur 34 (représenté en traits interrompus) solidaire de l'arbre de sortie 6 du mécanisme d'entraînement 5.

L'outil de travail 8 comprend une raclette qui présente la forme d'un barreau à section verticale triangulaire ayant une base 35 sensiblement parallèle au fond 15 de la cuve 12 et une face inclinée dite d'attaque 36 tournée vers le haut dans le sens de rotation. L'outil peut tourner jusqu'à environ 300 tours/minute. L'outil 8, restant sur le fond 15 de la cuve 12 pendant la cuisson, est avantageusement revêtu d'un matériau anti-adhésif qui permet un démoulage aisé de la préparation.

Le bol 1 est équipé d'un couvercle 37 en un matériau isolant thermique comportant un réflecteur métallique 38 tourné vers l'intérieur de la cuve 12, et présentant une ouverture centrale 39 de manière à évacuer la vapeur d'eau pendant la cuisson. Le reflecteur 38, chauffé par la cuve 12 par conduction, fait dorer par rayonnement le dessus de la préparation et évite la condensation de la vapeur et donc les chutes d'eau dans la préparation. Grâce à ce couvercle 37, on obtient un véritable four.

L'appareil comporte en outre un dispositif de commande programmable (non représenté) relié à un régulateur de vitesse de rotation de l'outil 8 et à un régulateur de la puissance des éléments chauffants 10,11 de manière à effectuer, soit un cycle de cuisson automatique pour lequel la vitesse de rotation et les puissances des éléments chauffants 10,11 sont fixées en fonction du type de préparation, soit un cycle de cuisson manuel pour lequel l'utilisateur choisit une vitesse de rotation et une puissance pour l'élément chauffant de fond 11, la puissance de l'élément chauffant latéral 10 restant nulle.

Dans un but de clarté, les différents modes d'utilisation de l'appareil vont être expliqués .

Pour utiliser l'appareil en saucière ou en sauteuse (cycle de cuisson manuel), l'utilisateur règle la puissance de la résistance blindée 11, la température étant régulée électroniquement par l'intermédiaire d'un détecteur thermostatique 30' qui est relié au plot 30. L'utilisateur règle aussi la vitesse de rotation de l'outil 8.

Pour utiliser l'appareil en four (cycle de cuisson automatique) la vitesse de rotation de l'outil 8 et la puissance des éléments chauffants 10,11 sont pré-programmées (soit par l'utilisateur, soit par le fabricant). L'utilisateur insère ses ingrédients dans le bol et ferme le couvercle 37. Les ingrédients sont ensuite pétris puis cuits selon le temps, la vitesse de rotation et la température déterminés par les cycles du programme. Ainsi l'utilisateur utilise un accessoire unique pour accomplir les deux fonctions : pétrissage et cuisson. A la fin de la cuisson, l'utilisateur démoule la préparation.

## Revendications

1. Appareil de pétrissage et de cuisson d'ingrédients alimentaires, comprenant un bol de travail (1) comportant un fond (2) et une paroi latérale (3), et monté amovible sur un socle (4) renfermant un mécanisme d'entraînement (5) dont l'arbre de sortie (6) est destiné à venir s'accoupler avec un arbre d'entraînement (7) qui traverse le fond (2) du bol et qui est solidaire en rotation d'un outil de travail (8) agencé dans le bol, ledit bol (1) étant formé d'une cuve (12) et d'une enveloppe (13) montées à légère distance l'une de l'autre, et comportant en outre des moyens de chauffage (10,11) qui sont agencés dans l'espace E laissé entre la cuve (12) et l'enveloppe (13) et qui sont alimentés en courant électrique par l'intermédiaire d'organes de connexion électrique (17,18,19) complémentaires,
**caractérisé en ce que** les moyens de chauffage sont répartis en un élément chauffant latéral (10) destiné à chauffer la paroi latérale (14) de la cuve (12) et constitué par un fil résistant bobiné autour d'un support isolant (20) entourant la cuve (12), et en un élément chauffant de fond (11) destiné à chauffer le fond (15) de la cuve (12) et constitué par une résistance chauffante blindée, et le rapport de la puissance de l'élément chauffant latéral (10) à la puissance maximale de l'élément chauffant de fond (11) est compris entre 0,3 et 0,4, lesdits organes de connexion électrique complémentaires (17,18,19) étant amovibles et agencés respectivement sur l'enveloppe (13) et le socle (4).

2. Appareil selon la revendication 1,
**caractérisé en ce que** l'espace E entre la cuve (12) et l'enveloppe (13) est rendu étanche par des moyens d'étanchéité (22,23) interposés, d'une part, entre les bords supérieurs (24,25) de la cuve (12) et de l'enveloppe (13) et, d'autre part, entre les parois respectives des fonds (15,26) de la cuve (12) et de l'enveloppe (13).

3. Appareil selon la revendication 2,
**caractérisé en ce que** le fond (15) de la cuve (12) comporte des moyens de fixation (28) avec l'enveloppe (13) de manière à constituer, avec les moyens d'étanchéité (22,23), un bol (1) parfaitement étanche, ne laissant apparaître sur le fond (26) de l'enveloppe que lesdits organes de connexion électrique (17,18), un plot de capteur de température (30) et l'extrémité de l'arbre d'entraînement (7) équipé d'un organe d'accouplement amovible (33) destiné à venir en prise avec un entraîneur (34) solidaire de l'arbre de sortie (6) du mécanisme d'entraînement (5).

4. Appareil selon la revendication 2 ou 3,
**caractérisé en ce que** la cuve (12) et l'enveloppe (13) sont cylindriques et le bord supérieur (24) de ladite cuve (12) présente un rebord (27) en forme de gorge qui vient recouvrir le bord (25) de l'enveloppe (13) et qui contient un (22) des moyens d'étanchéité.

5. Appareil selon l'une quelconque des revendications précédentes,
**caractérisé en ce que** la cuve (12) étant en métal, la résistance blindée (11) est solidaire du fond (15) de la cuve (12), et l'enveloppe (13) est constituée d'un matériau plastique isolant thermique et est séparée de la résistance blindée (11) par un matériau isolant (21).

6. Appareil selon l'une quelconque des revendications précédentes,
**caractérisé en ce que** l'outil de travail (8) comprend une raclette qui présente la forme d'un barreau à section verticale triangulaire ayant une base (35) sensiblement parallèle au fond (15) de la cuve (12) et une face inclinée dite d'attaque (36) tournée vers le haut.

7. Appareil selon l'une quelconque des revendications précédentes,
**caractérisé en ce que** le bol (1) est équipé d'un couvercle (37) en un matériau isolant thermique comportant un réflecteur métallique (38) tourné vers l'intérieur de la cuve (12), et présentant une ouverture (39) de manière à évacuer la vapeur d'eau pendant la cuisson.

8. Appareil selon l'une quelconque des revendications précédentes,
**caractérisé en ce que** l'appareil comporte en outre un dispositif de commande programmable relié à un régulateur de vitesse de rotation de l'outil (8) et à un régulateur de la puissance des éléments chauffants (10,11) de manière à effectuer, soit un cycle de cuisson automatique pour lequel la vitesse de rotation et les puissances des éléments chauffants (10,11) sont fixées en fonction du type de préparation, soit un cycle de cuisson manuel pour lequel l'utilisateur choisit une vitesse de rotation et une puissance pour l'élément chauffant de fond (11), la puissance de l'élément chauffant latéral (10) restant nulle.

## Patentansprüche

1. Vorrichtung zum Mischen , Rühren oder Kneten und zum Kochen oder Backen von Lebensmittelzutaten mit einer Arbeitsschüssel (1) mit einem Boden (2) und einer Seitenwand (3), die abnehmbar auf einem Sockel (4) gehalten ist, der einen Antriebsmechanismus (5) umschließt, dessen Abtriebswelle (6) zum Kuppeln mit einer Antriebswelle (7) bestimmt ist, die den Boden (2) der Schüssel durchsetzt und drehfest mit einem in der Schüssel angeordneten Arbeitswerkzeug (8) verbunden ist, wobei die Schüssel (1) von einem Behälter (12) und einem in geringem Abstand davon montierten Mantel (13) gebildet ist und außerdem eine Heizvorrichtung (10, 11) aufweist, die in dem zwischen dem Behälter (12) und dem Mantel (13) gelassenen Raum (E) angeordnet und mittels komplemetärer elektrischer Verbindungselemente (17, 18, 19) mit Strom versorgt ist, **dadurch gekennzeichnet,** daß die Heizvorrichtung aufgeteilt ist in ein seitliches Heizelement (10), das zum Erwärmen der Seitenwand (14) des Behälters (12) dient und aus einem um einen den Behälter (12) umgebenden isolierenden Halter (20) gewickelten Widerstandsdraht besteht, und ein Bodenheizelement (11), das zum Erwärmen des Bodens (15) des Behälters (12) dient und aus einem ummantelten Heizelement besteht, wobei das Verhältnis der Leistung des seitlichen Heizelements (10) zur maximalen Leistung des Bodenheizelements (11) zwischen 0,3 und 0,4 liegt und die komplementären elektrischen Verbindungselemente (17, 18, 19) abnehmbar und jeweils am Mantel (13) und Sockel (4) angeordnet sind.

2. Vorrichtung nach Anspruch 1, **dadurch gekennzeichnet,** daß der Raum (E) zwischen dem Behälter (12) und dem Mantel (13) durch Dichtungsmittel (22, 23) abgedichtet ist, die einerseits zwischen den Oberkanten (24, 25) des Behälters (12) und des Mantels (13) und andererseits zwischen den jeweiligen Wänden der Böden (15, 26) des Behälters (12) und des Mantels (13) angeordnet sind.

3. Vorrichtung nach Anspruch 2, **dadurch gekennzeichnet,** daß der Boden (15) des Behälters (12) Befestigungsmittel (28) zur Befestigung am Mantel (13) aufweist, so daß mit den Dichtungsmitteln (22, 23) eine vollkommen dichte Schüssel (1) gebildet wird, welche am Boden (26) des Mantels (13) nur die elektrischen Verbindungselemente (17, 18), einen Kontaktklotz des Temperaturfühlers (30) und das Ende der Antriebswelle (7) hervortreten läßt, das mit einem Kupplungselement (33) ausgerüstet ist, das abnehmbar in Eingriff kommt mit einem Mitnehmer 34, der fest mit der Abtriebswelle (6) des Antriebsmechanismus (5) verbunden ist.

4. Vorrichtung nach Anspruch 2 oder 3, **dadurch gekennzeichnet,** daß der Behälter (12) und der Mantel (13) zylindrisch sind und die Oberkante (24) des Behälters (12) eine Krempe (27) mit einer Rinne bildet, welche die Kante (25) des Mantels (13) überdeckt, und eines (22) der Dichtungsmittel enthält.

5. Vorrichtung nach einem der vorangehenden Ansprüche, **dadurch** **gekennzeichnet,** daß der Behälter (12) aus Metall besteht, der ummantelte Widerstand (11) fest-mit dem Boden (15) des Behälters (12) verbunden ist und der Mantel (13) aus einem wärmeisolierenden Kunststoffmaterial besteht und vom ummantelten Widerstand (11) durch ein Isoliermaterial (21) getrennt ist.

6. Vorrichtung nach einem der vorangehenden Ansprüche, **dadurch** **gekennzeichnet,** daß das Arbeitswerkzeug (8) einen Rührer aufweist, der die Form eines Stabes mit dreieckigem vertikalen Querschnitt mit einer zum Boden (15) des Behälters (12) im wesentlichen parallelen Basis (35) und einer nach oben gerichteten schrägen sogenannten Angriffsfläche (36) hat.

7. Vorrichtung nach einen der vorangehenden Ansprüche, **dadurch** **gekennzeichnet,** daß die Schüssel (1) mit einem Deckel (37) aus einem wärmeisolierenden Material mit einem zum Inneren des Behälters (12) gerichteten Reflektor (38) aus Metall ausgerüstet ist und der Deckel eine Öffnung (39) aufweist, um Wasserdampf während des Kochens abzuführen.

8. Vorrichtung nach einem der vorangehenden Ansprüche, **dadurch** **gekennzeichnet,** daß die Vorrichtung außerdem eine programmierbare Steuervorrichtung aufweist, die mit einem Regler der Drehgeschwindigkeit des Werkzeugs (8) und einem Regler der Leistung der Heizelemente (10, 11) verbunden ist, so daß entweder ein automatischer Kochzyklus durchgeführt werden kann, in welchem die Drehgeschwindigkeit und die Leistungen der Heizelemente (10, 11) in Abhängigkeit von der Zubereitungsart festgelegt sind, oder ein manueller Kochzyklus durchgeführt werden kann, bei welchem der Benutzer eine Drehgeschwindigkeit und eine Leistung des Bodenheizelements wählt, während die Leistung des seitlichen Heizelements (10) Null bleibt.

## Claims

1. Kneading and cooking appliance for food ingredients, comprising a working bowl (1) having a bottom (2) and a lateral wall (3) and mounted removably on a base (4) enclosing a drive mechanism (5), the output shaft (6) of which is intended to be coupled with a drive shaft (7) which passes through the bottom (2) of the bowl and which is integral in rotation with a working tool (8) fitted in the bowl, the said bowl consisting of a vessel (12) and an outer casing (13) mounted a short distance from each other, and having, in addition, heating means (10, 11) which are fitted in the space E left between the vessel (12) and the outer casing (13) and which are supplied with electric current by means of complementary electrical connection devices (17, 18, 19), characterised in that the heating means are divided into a lateral heating device (10) intended to heat the lateral wall (14) of the vessel (12) and consisting of a resistance wire coiled around an insulating support (20) surrounding the vessel (12) and a bottom heating device (11) intended to heat the bottom (15) of the vessel (12) and consisting of an encased heating element, and the ratio of the power of the lateral heating device (10) to the maximum power of the bottom heating device (11) is between 0.3 and 0.4, the said complementary electrical connection devices (17, 18, 19) being detachable and fitted to the outer casing (13) and the base (4) respectively.

2. Appliance according to Claim 1, characterised in that the space E between the vessel (12) and the outer casing (13) is sealed by sealing means (22, 23) interposed on the one hand between the top rims (24, 25) of the vessel (12) and outer casing (13) and on the other hand between the respective walls of the bottoms (15, 26) of the vessel (12) and outer casing (13).

3. Appliance according to Claim 2, characterised in that the bottom (15) of the vessel (12) has means (28) for fixing to the outer casing (13) so as to form, with the sealing means (22, 23), a bowl (1) which is perfectly sealed, leaving visible on the bottom (26) of the outer casing only the said electrical connection devices (17, 18), a temperature sensor stud (30) and the end of the drive shaft (7) equipped with a removable coupling component (33) intended to engage with a drive (34) integral with the output shaft (6) of the drive mechanism (5).

4. Appliance according to Claim 2 or 3, characterised in that the vessel (12) and outer casing (13) are cylindrical and the rim (24) of the said vessel (12) has a flange (27) in the form of a groove which covers the rim of the outer casing (13) and which contains one (22) of the sealing means.

5. Appliance according to any one of the preceding claims, characterised in that, the vessel (12) being made of metal, the encased heating element (11) is integral with the bottom (15) of the vessel (12), and the outer casing (13) is composed of a thermally insulating plastic and is separated from the encased heating element (11) by an insulating material (21).

6. Appliance according to any one of the preceding claims, characterised in that the working tool comprises a scraper in the form of a bar with a triangular vertical cross section and having a bottom (35) substantially parallel to the bottom (15) of the vessel (12) and a sloping face known as the leading face (36) turned upwards.

7. Appliance according to any one of the preceding claims, characterised in that the vessel (1) is equipped with a cover (37) made of thermally insulating material, including a metal reflector (38) turned towards the inside of the vessel (12) and having an opening (39) so as to discharge the steam during cooking.

8. Appliance according to any one of the preceding claims, characterised in that the appliance has, in addition, a programmable control device linked to a device regulating the speed of rotation of the tool (8) and a device regulating the power of the heating devices (10, 11) so as to carry out either an automatic cooking cycle for which the rotation speed and the power levels of the heating devices (10, 11) are fixed according to the type of mix, or a manual cooking cycle for which the user chooses a rotation speed and a power level for the bottom heating device (11), the power level of the lateral heating device (10) remaining zero.
